# EUROPEAN PATENT SPECIFICATION

(11) **EP 4 128 166 B1**
(45) Date of publication and mention of the grant of the patent: **31.12.2025**
(21) Application number: 21714755.2
(22) Date of filing: 05.03.2021
(51) Int. Cl.: G06T 15/00, G06T 15/60

(54) **RENDERING USING SHADOW INFORMATION**
WIEDERGABE MIT SCHATTENINFORMATION
RENDU UTILISANT DES INFORMATIONS D'OMBRE

(30) Priority: 03.04.2020 US 202063005155 P; 02.11.2020 US 202017087252
(43) Date of publication of application: 08.02.2023
(73) Proprietor: Qualcomm Incorporated, San Diego, CA 92121-1714 (US)
(72) Inventor: GARVEY, Joseph Daniel, San Diego, California 92121-1714 (US); VRCELJ, Bojan, San Diego, California 92121-1714 (US)
(74) Representative: Reddie & Grose LLP
(86) International application number: PCT/US2021/021244
(87) International publication number: WO 2021/202054

(56) References cited:
- EP-A1- 3 540 697
- HOSHANG KOLIVAND ET AL: "Shadow Generation in Mixed Reality: A Comprehensive Survey", IETE TECHNICAL REVIEW., vol. 32, no. 1, 8 December 2014 (2014-12-08), XX, pages 3 - 15, XP055584864, ISSN: 0256-4602, DOI: 10.1080/02564602.2014.906860
- SHU SHI ET AL: "A Survey of Interactive Remote Rendering Systems", ACM COMPUTING SURVEYS, ACM, NEW YORK, NY, US, US, vol. 47, no. 4, 26 May 2015 (2015-05-26), pages 1 - 29, XP058069615, ISSN: 0360-0300, DOI: 10.1145/2719921

## Description

### TECHNICAL FIELD

The present disclosure relates generally to processing systems and, more particularly, to one or more techniques for graphics processing.

### INTRODUCTION

Computing devices often utilize a graphics processing unit (GPU) to accelerate the rendering of graphical data for display. Such computing devices may include, for example, computer workstations, mobile phones such as so-called smartphones, embedded systems, personal computers, tablet computers, and video game consoles. GPUs execute a graphics processing pipeline that includes one or more processing stages that operate together to execute graphics processing commands and output a frame. A central processing unit (CPU) may control the operation of the GPU by issuing one or more graphics processing commands to the GPU. Modem day CPUs are typically capable of concurrently executing multiple applications, each of which may need to utilize the GPU during execution. A device that provides content for visual presentation on a display generally includes a GPU.

Typically, a GPU of a device is configured to perform the processes in a graphics processing pipeline. However, with the advent of wireless communication and smaller, handheld devices, there has developed an increased need for improved graphics processing. EP 3 540 697 Al discloses a method and an apparatus for processing a 3D scene. At least one virtual reference viewpoint in the 3D scene is determined. A map of registered real cast shadows of objects in the 3D scene from an input image captured by a camera positioned at a viewpoint distinct from the virtual reference viewpoint is obtained, the map of real cast shadows being registered with regards to the virtual reference viewpoint. Parameters for at least one light source in the 3D scene are determined using the map of registered real cast shadows and at least one map of virtual shadows of objects in the 3D scene cast by the at least one light source from the virtual reference viewpoint.

### SUMMARY

The invention is defined in the appended claims to which reference should now be made. Preferable features are defined in the dependent claims. The following presents a simplified summary of one or more aspects in order to provide a basic understanding of such aspects.

In aspects of the technology disclosed hereon, example methods, computer-readable media, and apparatuses are described. A scene includes one or more real-world objects and one or more one computer generated (CG) objects. The scene is characterized by a scene geometry of a first time. The technology generates, based on the scene geometry of the first time, shadow information for each of one or more shadows cast by a CG object of the scene on one or more real-world objects of the scene. The technology may then render and display a frame of the scene as a function of i) the shadow information and ii) a scene geometry at a time of the rendering later than the first time.

The shadow information includes shadow factors (each shadow factor describing a light attenuation effect of a cast shadow on a real world object surface, and each shadow factor incorporated into a shading atlas of the scene) and a set of identifiers (each identifier in the set identifying a real-world object surface of the scene affected by a shadow factor). The generating is performed by a first device, the rendering and the displaying are performed by a second device, and the first device is in communication with the second device over a network. Prior to the rendering, the technology encodes the shading atlas into a video data stream. The first device transmits, over the network to the second device, the set of identifiers and the video stream encoding the shading atlas. The second device then receives, from the first device and over the network, the set of identifiers and the video stream encoding the shading atlas, and decodes the video stream.

In some such aspects, the video stream is a Moving Picture Experts Group (MPEG) transport stream. In some such aspects, prior to the generating, the second device determines a second device scene geometry, and then transmits, to the first device over the network, the second device scene geometry. In such aspects, the first device receives, from the second device over the network, the transmitted second device scene geometry. In such aspects, the scene geometry of the first time is based at least in part on the second device scene geometry. In some aspects, the second device scene geometry includes one or more of pose information of the second device, image information captured by the second device, or mesh information of the second device. In some aspects, the second device is one of a video see-through device or an optical see-through device. In some aspects, generating shadow information for each of one or more shadows cast by a CG object of the scene on one or more real-world objects of the scene includes at least partially blocking one or more real light sources in the scene.

In some aspects, the technology may generate, based on the scene geometry of the first time, shadow information for each of one or more shadows cast by a CG object of the scene on one or more real-world objects of the scene. The shadow information includes shadow factors as described above and a set of identifiers as described above. In such aspects, the first device encodes the shading atlas into a video data stream. The first device transmits, over a network to a second device, the set of identifiers and the video stream encoding the shading atlas. In some such aspects, the video stream is a Moving Picture Experts Group (MPEG) transport stream. In some such aspects, prior to the generating, the first device receives, from the second device over the network, second device scene geometry. In such aspects, the scene geometry of the first time is based at least in part on the second device scene geometry. In some aspects, the second device scene geometry comprises one or more of pose information of the second device, two-dimensional information captured by the second device, or mesh information of the second device. In some aspects, the second device is one of a video see-through device or an optical see-through device.

In some aspects, the technology may receive, by a second device from a first device and over a network, a set of identifiers and a video stream encoding a shading atlas as described above. In such aspects, the second device may decode the video stream; and then render and display a frame of the scene as a function of the shadow information and the scene geometry at a time of the rendering later than the first time. In some such aspects, the video stream is a Moving Picture Experts Group (MPEG) transport stream. In some such aspects, prior to the receiving, the second device may transmit, to the first device and over the network, second device scene geometry. In such aspects, the scene geometry of the first time is based at least in part on the transmitted second device scene geometry. In some such aspects, the transmitted second device scene geometry comprises one or more of pose information of the second device, two-dimensional information captured by the second device, or mesh information of the second device. In some such aspects, the second device is one of a video see-through device or an optical see-through device.

The details of one or more aspects of the technology disclosed herein are set forth in the accompanying drawings and the description below. Other features, objects, and advantages of the technology disclosed herein will be apparent from the description and drawings, and from the claims.

### BRIEF DESCRIPTION OF DRAWINGS

FIG. 1 is a block diagram that illustrates an example content generation system in accordance with one or more techniques of this disclosure.
FIG. 2 illustrates an example shading atlas in accordance with one or more techniques of this disclosure.
FIG. 3 illustrates an example diagram including communication between a client device and a server in accordance with one or more techniques of this disclosure.
FIG. 4 illustrates an example scene in accordance with one or more techniques of this disclosure.
FIG. 5 is a flowchart of an example method in accordance with one or more techniques of this disclosure.
FIG. 6 is a flowchart of an example method in accordance with one or more techniques of this disclosure.
FIG. 7 is a flowchart of an example method in accordance with one or more techniques of this disclosure.

### DETAILED DESCRIPTION

Extended reality (XR) is an umbrella term referring to the collection of technology used for virtual reality or immersive environments, augmented or mixed reality, and other related technologies. Split rendering is a technology enabling limited-resource mobile XR devices (clients) to display very high complexity and high fidelity computer generated content in real-time by offloading some of the necessary compute to remote rendering machines (servers) located in the network edge compute centers or in the cloud. In XR, real-world objects and computer-generated (CG) objects/content (hereinafter referred to for simplicity as "CG objects") can coexist in users field of view and can cast shadows on one another. For example, if a CG object is blocking or occluding a real-world object from a light source, the CG object can cast a shadow onto the real-world object. However, displaying these shadows cast onto real-world objects can provide a number of challenges, especially in split rendering systems or other XR systems where the delay between the shading and display is significant. For instance, the client device and/or server may experience latency issues disproportionately affecting the rendition of CG object shadows cast on real-world objects, due to the nature of interplay between these virtual shadows and the real-world geometry receiving them. In addition, it can be a challenge to provide an accurate and immersive depiction of shadows cast on real-world objects as viewed through XR devices in the presence of these latencies. Examples of the technology disclosed herein can address the aforementioned issues with shadows cast on real-world objects by CG objects in presence of significant latency between content shading and display. In addition, examples of the technology disclosed herein can provide an accurate depiction of CG object shadows cast onto real-world objects.

Various aspects of systems, apparatuses, computer program products, and methods are described more fully hereinafter with reference to the accompanying drawings. This technology described herein may, however, be embodied in many different forms and should not be construed as limited to any specific structure or function presented throughout this disclosure. Rather, these aspects are provided so that this disclosure will be thorough and complete, and will fully convey the scope of the technology described herein to those skilled in the art. Based on the teachings herein one skilled in the art should appreciate that the scope of this disclosure is intended to cover any aspect of the systems, apparatuses, computer program products, and methods disclosed herein, whether implemented independently of, or combined with, other aspects of the disclosure. For example, an apparatus may be implemented or a method may be practiced using any number of the aspects set forth herein. In addition, the scope of the disclosure is intended to cover such an apparatus or method that is practiced using other structure, functionality, or structure and functionality in addition to or other than the various aspects of the disclosure set forth herein. Any aspect disclosed herein may be embodied by one or more elements of a claim.

Although various aspects are described herein, many variations and permutations of these aspects fall within the scope of this disclosure. Although some potential benefits and advantages of aspects of the technology described herein are mentioned, the scope of this disclosure is not intended to be limited to particular benefits, uses, or objectives. Rather, aspects of this disclosure are intended to be broadly applicable to different wireless technologies, system configurations, networks, and transmission protocols, some of which are illustrated by way of example in the figures and in the following description. The detailed description and drawings are merely illustrative of the technology described herein rather than limiting, the claimed invention being defined by the appended claims.

Several aspects are presented with reference to various apparatus and methods. These apparatus and methods are described in the following detailed description and illustrated in the accompanying drawings by various blocks, components, circuits, processes, algorithms, and the like (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors (which may also be referred to as processing units). Examples of processors include microprocessors, microcontrollers, graphics processing units (GPUs), general purpose GPUs (GPGPUs), central processing units (CPUs), application processors, digital signal processors (DSPs), reduced instruction set computing (RISC) processors, systems-on-chip (SOC), baseband processors, application specific integrated circuits (ASICs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software can be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise. The term application may refer to software. As described herein, one or more techniques may refer to an application, i.e., software, being configured to perform one or more functions. In such examples, the application may be stored on a memory, e.g., on-chip memory of a processor, system memory, or any other memory. Hardware described herein, such as a processor may be configured to execute the application. For example, the application may be described as including code that, when executed by the hardware, causes the hardware to perform one or more techniques described herein. As an example, the hardware may access the code from a memory and execute the code accessed from the memory to perform one or more techniques described herein. In some examples, components are identified in this disclosure. In such examples, the components may be hardware, software, or a combination thereof. The components may be separate components or sub-components of a single component.

Accordingly, in one or more examples described herein, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

In general, this disclosure describes techniques for having a graphics processing pipeline across one or multiple devices, improving the rendering of graphical content, and/or reducing latency as experience by the end viewer. For example, this disclosure describes techniques for graphics processing in devices that utilize graphics processing. Other example benefits are described throughout this disclosure.

As used herein, instances of the term "content" may refer to "graphical content," "products of 3D graphics design," their rendition, i.e., "images," and vice versa. This is true regardless of whether the terms are being used as an adjective, noun, or other parts of speech. In some examples, as used herein, the term "graphical content" may refer to a content produced by one or more processes of a graphics processing pipeline. In some examples, as used herein, the term "graphical content" may refer to a content produced by a processing unit configured to perform graphics processing. In some examples, as used herein, the term "graphical content" may refer to a content produced by a graphics processing unit.

In some examples, as used herein, the term "display content" may refer to content generated by a processing unit configured to perform displaying processing. In some examples, as used herein, the term "display content" may refer to content generated by a display processing unit. Graphical content may be processed to become display content. For example, a graphics processing unit may output graphical content, such as a frame, to a buffer (which may be referred to as a framebuffer). A display processing unit may read the graphical content, such as one or more frames from the buffer, and perform one or more display processing techniques thereon to generate display content. For example, a display processing unit may be configured to perform composition on one or more rendered layers to generate a frame. As another example, a display processing unit may be configured to compose, blend, or otherwise combine two or more layers together into a single frame. A display processing unit may be configured to perform scaling, e.g., upscaling or downscaling, on a frame. In some examples, a frame may refer to a layer. In other examples, a frame may refer to two or more layers that have already been blended together to form the frame, i.e., the frame includes two or more layers, and the frame that includes two or more layers may subsequently be blended.

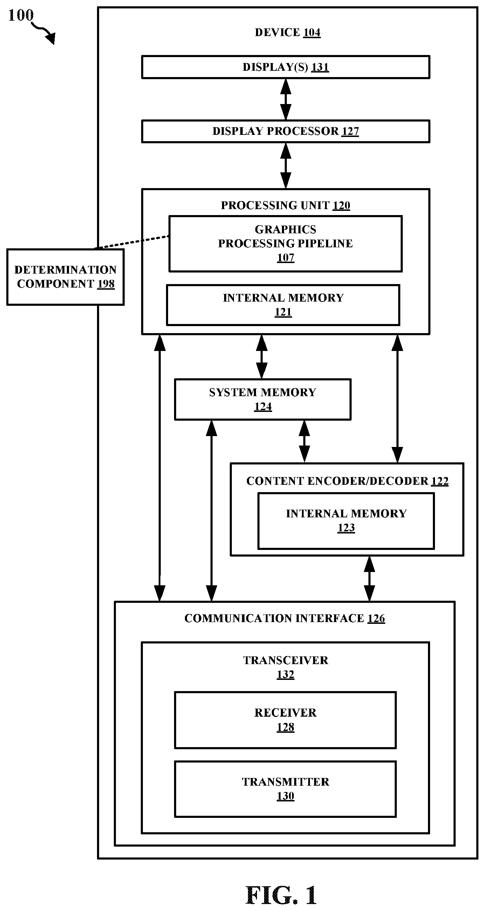

FIG. 1 is a block diagram that illustrates an example system 100 configured to implement one or more techniques of this disclosure. The system 100 includes a device 104. The device 104 may include one or more components or circuits for performing various functions described herein. In some examples, one or more components of the device 104 may be components of an SOC. The device 104 may include one or more components configured to perform one or more techniques of this disclosure. In the example shown, the device 104 may include a processing unit 120, a content encoder/decoder 122, and a system memory 124. In some aspects, the device 104 can include a number of optional components, e.g., a communication interface 126, a transceiver 132, a receiver 128, a transmitter 130, a display processor 127, and one or more displays 131. Reference to the display 131 may refer to the one or more displays 131. For example, the display 131 may include a single display or multiple displays. The display 131 may include a first display and a second display. The first display may be a left-eye display and the second display may be a right-eye display. In some examples, the first and second display may receive different frames for presentment thereon. In other examples, the first and second display may receive the same frames for presentment thereon. In further examples, the results of the graphics processing may not be displayed on the device, e.g., the first and second display may not receive any frames for presentment thereon. Instead, the frames or graphics processing results may be transferred to another device. In some aspects, this can be referred to as split rendering.

The processing unit 120 may include an internal memory 121. The processing unit 120 may be configured to perform graphics processing, such as in a graphics processing pipeline 107. The content encoder/decoder 122 may include an internal memory 123. In some examples, the device 104 may include a display processor, such as the display processor 127, to perform one or more display processing techniques on one or more frames generated by the processing unit 120 before presentment by the one or more displays 131. The one or more displays 131 may be configured to display or otherwise present frames processed by the display processor 127. In some examples, the one or more displays 131 may include one or more of: a liquid crystal display (LCD), a plasma display, an organic light emitting diode (OLED) display, a projection display device, an augmented reality display device, a virtual reality display device, a head-mounted display, or any other type of display device.

Memory external to the processing unit 120 and the content encoder/decoder 122, such as system memory 124, may be accessible to the processing unit 120 and the content encoder/decoder 122. For example, the processing unit 120 and the content encoder/decoder 122 may be configured to read from and/or write to external memory, such as the system memory 124. The processing unit 120 and the content encoder/decoder 122 may be communicatively coupled to the system memory 124 over a bus. In some examples, the processing unit 120 and the content encoder/decoder 122 may be communicatively coupled to each other over the bus or a different connection.

The content encoder/decoder 122 may be configured to receive graphical content from any source, such as the system memory 124 and/or the communication interface 126. The system memory 124 may be configured to store received encoded or decoded graphical content. The content encoder/decoder 122 may be configured to receive encoded or decoded graphical content, e.g., from the system memory 124 and/or the communication interface 126, in the form of encoded pixel data. The content encoder/decoder 122 may be configured to encode or decode any graphical content.

The internal memory 121 or the system memory 124 may include one or more volatile or non-volatile memories or storage devices. In some examples, internal memory 121 or the system memory 124 may include RAM, SRAM, DRAM, erasable programmable ROM (EPROM), electrically erasable programmable ROM (EEPROM), flash memory, a magnetic data media or an optical storage media, or any other type of memory.

The internal memory 121 or the system memory 124 may be a non-transitory storage medium according to some examples. The term "non-transitory" may indicate that the storage medium is not embodied in a carrier wave or a propagated signal. However, the term "non-transitory" should not be interpreted to mean that internal memory 121 or the system memory 124 is non-movable or that its contents are static. As one example, the system memory 124 may be removed from the device 104 and moved to another device. As another example, the system memory 124 may not be removable from the device 104.

The processing unit 120 may be a central processing unit (CPU), a graphics processing unit (GPU), a general purpose GPU (GPGPU), or any other processing unit that may be configured to perform graphics processing. In some examples, the processing unit 120 may be integrated into a motherboard of the device 104. In some examples, the processing unit 120 may be present on a graphics card that is installed in a port in a motherboard of the device 104, or may be otherwise incorporated within a peripheral device configured to interoperate with the device 104. The processing unit 120 may include one or more processors, such as one or more microprocessors, GPUs, application specific integrated circuits (ASICs), field programmable gate arrays (FPGAs), arithmetic logic units (ALUs), digital signal processors (DSPs), discrete logic, software, hardware, firmware, other equivalent integrated or discrete logic circuitry, or any combinations thereof. If the techniques are implemented partially in software, the processing unit 120 may store instructions for the software in a suitable, non-transitory computer-readable storage medium, e.g., internal memory 121, and may execute the instructions in hardware using one or more processors to perform the techniques of this disclosure. Any of the foregoing, including hardware, software, a combination of hardware and software, etc., may be considered to be one or more processors.

The content encoder/decoder 122 may be any processing unit configured to perform content decoding. In some examples, the content encoder/decoder 122 may be integrated into a motherboard of the device 104. The content encoder/decoder 122 may include one or more processors, such as one or more microprocessors, application specific integrated circuits (ASICs), field programmable gate arrays (FPGAs), arithmetic logic units (ALUs), digital signal processors (DSPs), video processors, discrete logic, software, hardware, firmware, other equivalent integrated or discrete logic circuitry, or any combinations thereof. If the techniques are implemented partially in software, the content encoder/decoder 122 may store instructions for the software in a suitable, non-transitory computer-readable storage medium, e.g., internal memory 123, and may execute the instructions in hardware using one or more processors to perform the techniques of this disclosure. Any of the foregoing, including hardware, software, a combination of hardware and software, etc., may be considered to be one or more processors.

In some aspects, the system 100 can include an optional communication interface 126. The communication interface 126 may include a receiver 128 and a transmitter 130. The receiver 128 may be configured to perform any receiving function described herein with respect to the device 104. Additionally, the receiver 128 may be configured to receive information, e.g., eye or head position information, rendering commands, or location information, from another device. The transmitter 130 may be configured to perform any transmitting function described herein with respect to the device 104. For example, the transmitter 130 may be configured to transmit information to another device, which may include a request for content. The receiver 128 and the transmitter 130 may be combined into a transceiver 132. In such examples, the transceiver 132 may be configured to perform any receiving function and/or transmitting function described herein with respect to the device 104.

Referring again to FIG. 1, in certain aspects, a scene may include one or more real-world objects and one or more one computer generated (CG) objects. The scene may be characterized by a scene geometry of a first time. In such aspects, the graphics processing pipeline 107 may include a determination component 198 configured to generate, based on the scene geometry of the first time, shadow information for each of one or more shadows cast by a CG object of the scene on one or more real-world objects of the scene. The graphics processing pipeline 107 may then render and display a frame of the scene as a function of i) the shadow information and ii) a scene geometry at a time of the rendering later than the first time.

In some such aspects, the shadow information may include: shadow factors (each shadow factor describing a light attenuation effect of a cast shadow on a real world object surface, and each shadow factor incorporated into a shading atlas of the scene) and a set of identifiers (each identifier in the set identifying a real-world object surface of the scene affected by a shadow factor). In some such aspects, the generating is performed by a first device, the rendering and the displaying are performed by a second device, and the first device is in communication with the second device over a network. In such aspects, prior to the rendering, the graphics processing pipeline 107 encodes the shading atlas into a video data stream. In such aspects, the first device transmits, over the network to the second device, the set of identifiers and the video stream encoding the shading atlas. The second device then receives, from the first device and over the network, the set of identifiers and the video stream encoding the shading atlas, and decodes the video stream.

In some such aspects, the video stream is a Moving Picture Experts Group (MPEG) transport stream. In some such aspects, prior to the generating, the second device determines a second device scene geometry, and then transmits, to the first device over the network, the second device scene geometry. In such aspects, the first device receives, from the second device over the network, the transmitted second device scene geometry. In such aspects, the scene geometry of the first time is based at least in part on the second device scene geometry. In some aspects, the second device scene geometry includes one or more of pose information of the second device, image information captured by the second device, or mesh information of the second device. In some aspects, the second device is one of a video see-through device or an optical see-through device. In some aspects, generating shadow information for each of one or more shadows cast by a CG object of the scene on one or more real-world objects of the scene includes at least partially blocking one or more real light sources in the scene.

As described herein, a device, such as the device 104, may refer to any one or more devices, apparatuses, or systems configured to perform one or more techniques described herein. For example, a device may be a server, a base station, user equipment, a client device, a station, an access point, a computer, e.g., a personal computer, a desktop computer, a laptop computer, a tablet computer, a computer workstation, or a mainframe computer, an end product, an apparatus, a phone, a smart phone, a server, a video game platform or console, a handheld device, e.g., a portable video game device or a personal digital assistant (PDA), a wearable computing device, e.g., a smart watch, an augmented reality device, or a virtual reality device, a non-wearable device, a display or display device, a television, a television set-top box, an intermediate network device, a digital media player, a video streaming device, a content streaming device, an in-car computer, any mobile device, any device configured to generate graphical content, or any device configured to perform one or more techniques described herein. Processes herein may be described as performed by a particular component (e.g., a GPU), but, in further embodiments, can be performed using other components (e.g., a CPU), consistent with disclosed embodiments.

GPUs can process multiple types of data or data packets in a GPU pipeline. For instance, in some aspects, a GPU can process two types of data or data packets, e.g., context register packets and draw call data. A context register packet can be a set of global state information, e.g., information regarding a global register, shading program, or constant data, which can regulate how a graphics context will be processed. For example, context register packets can include information regarding a color format. In some aspects of context register packets, there can be a bit that indicates which workload belongs to a context register. In addition, there can be multiple functions or programming running at the same time and/or in parallel. For example, functions or programming can describe a certain operation, e.g., the color mode or color format. Accordingly, a context register can define multiple states of a GPU.

Context states can be utilized to determine how an individual processing unit functions, e.g., a vertex fetcher (VFD), a vertex shader (VS), a shader processor, or a geometry processor, and/or in what mode the processing unit functions. In order to do so, GPUs can use context registers and programming data. In some aspects, a GPU can generate a workload, e.g., a vertex or pixel workload, in the pipeline based on the context register definition of a mode or state. Certain processing units, e.g., a VFD, can use these states to determine certain functions, e.g., how a vertex is assembled. As these modes or states can change, GPUs may need to change the corresponding context. Additionally, the workload that corresponds to the mode or state may follow the changing mode or state.

GPUs can render images in a variety of different ways. In some instances, GPUs can render an image using rendering or tiled rendering. In tiled rendering GPUs, an image can be divided or separated into different sections or tiles. After the division of the image, each section or tile can be rendered separately. Tiled rendering GPUs can divide computer graphics images into a grid format, such that each portion of the grid, e.g., a tile, is separately rendered. In some aspects, during a binning pass, an image can be divided into different bins or tiles. Moreover, in the binning pass, different primitives can be shaded in certain bins, e.g., using draw calls. In some aspects, during the binning pass, a visibility stream can be constructed where visible primitives or draw calls can be identified.

In some aspects of rendering, there can be multiple processing phases or passes. For instance, the rendering can be performed in two passes, e.g., a visibility pass and a rendering pass. During a visibility pass, a GPU can input a rendering workload, record the positions of primitives or triangles, and then determine which primitives or triangles fall into which portion of a frame. In some aspects of a visibility pass, GPUs can also identify or mark the visibility of each primitive or triangle in a visibility stream. During a rendering pass, a GPU can input the visibility stream and process one portion of a frame at a time. In some aspects, the visibility stream can be analyzed to determine which primitives are visible or not visible. As such, the primitives that are visible may be processed. By doing so, GPUs on servers can reduce the unnecessary workload of processing or rendering primitives that are not visible.

In some aspects, rendering can be performed in multiple locations and/or on multiple devices, e.g., in order to divide the rendering workload between different devices, and/or in order to address latency issues. For example, the rendering can be split between a server and a client device, which can be referred to as "split rendering." In some instances, split rendering can be a method for bringing content to user devices or head mounted displays (HMDs), where a portion of the graphics processing can be performed outside of the device or HMD, e.g., at a server.

Split rendering can be performed for a number of different types of applications, e.g., extended reality (XR) applications. In XR applications, the content displayed at the user device can correspond to man-made or computer-generated (CG) content, e.g., content rendered at a server or user device. In XR content, a portion of the content displayed at the user device can correspond to real-world content, e.g., objects in the real world, and a portion of the content can be CG content. In addition, the CG content and real-world content can be displayed in an optical see-through or a video see-through device, such that the user can view real-world objects and CG content simultaneously. In some aspects, CG content can be referred to as man-made content, animated content, or augmented content, or vice versa.

Examples of the technology disclosed herein can consider a number of modalities of object-space rendering representation, such as vector streaming (VS) architecture. In VS architectures, the server 310 can stream, an object space representation (described using the shading atlas, the shadow material messages, and the geometry) for real-world and CG objects. For instance, in vector streaming architecture, a server can produce shading atlas information, e.g., a representation of the textures in a scene, and/or geometry information, e.g., information regarding the geometry of objects corresponding to these textures. For example, a server in vector streaming systems can also accompany the information about the mapping between the geometry primitives (e.g., triangles) and shading atlas primitives (e.g., patches or blocks). By providing this information, the server can supply clients with the texture coordinates in the atlas and the target screen positions in displayed frame for composing a final display frame through texture mapping.

In XR applications, CG objects can occlude/shadow other objects (both real world and CG) from the vantage point of the user device 330. This overlap of real-world content and CG content, which produces the aforementioned occlusions/shadows, is one reason that CG content and real-world content can blend so seamlessly within XR.

Besides occluding each other, real-world content and CG content can also cast shadows from one to the other, and realistic shadow-casting is another important aspect of creating a seamless XR experience. For instance, if a CG object stands between a light source and a real-world object, the appearance of a real-world object should be appropriately modified to account for the corresponding loss of luminance from the shadow cast by the CG object. Note that the light sources can be real-world light sources or CG light sources since both may appear seamlessly blended to the XR application user. Also, note that a realistic looking shadow is obtained as a combination of the shape of the outline of the shadow-caster as seen by the light source being blocked and the geometry of the shadow-receiving objects. The shadow caster in the case considered here is a CG object and the shadow-receiving objects of interest are real-world objects whose illumination from a particular light source is blocked or partially blocked by the shadow caster. One challenge in split rendering systems can be how to make the effect of shadows cast by CG objects to real-world objects as latency-insensitive as possible given that the shape, outline, and "intensity" of shadows are so dependent on geometry and relative positions of both shadow casters and shadow receivers, as well as the light source being blocked.

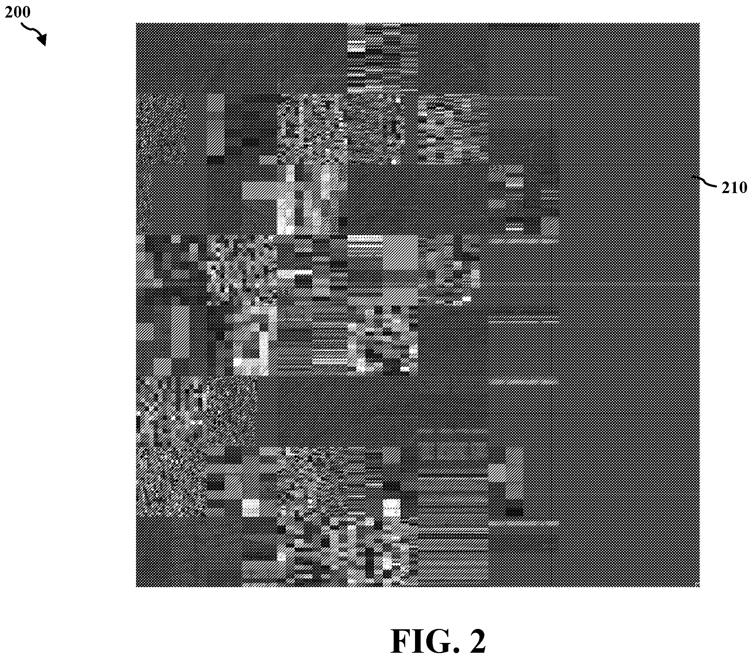

FIG. 2 illustrates shading atlas 200 in accordance with one or more techniques of this disclosure. As shown in FIG. 2, shading atlas 200 illustrates an efficient way of storing textures that are in object space, rather than in image space. FIG. 2 also shows that different portions of shading atlas 200 are shaded at different resolutions, e.g., depending on a distance from a camera. In addition, the dark gray portions, e.g., shade 210 or the portions along the right edge of the shading atlas 200, can represent unallocated portions of the shading atlas. In some instances, shading atlas 200 can be efficiently encoded based on a high temporal coherence. For example, one block in shading atlas 200 can represent the same physical surface in a virtual world. In some aspects, the blocks in the shading atlas 200 can remain in the same place for as long as they are potentially visible and/or occupying a similar area in a screen space.

In some aspects, shading information can be sent from a server to a client device using the shading atlas. The shading atlas can also be video encoded. In some instances, even though the encoded shading atlas may conform to a standard moving picture experts group (MPEG) based stream, at least some of the properties and/or information included in the shading atlas can be unique to a shading atlas transport. For instance, IDR frames may be inserted on occasions when the shading atlas being encoded undergoes changes compared to the previous frame (e.g., "atlas resets").

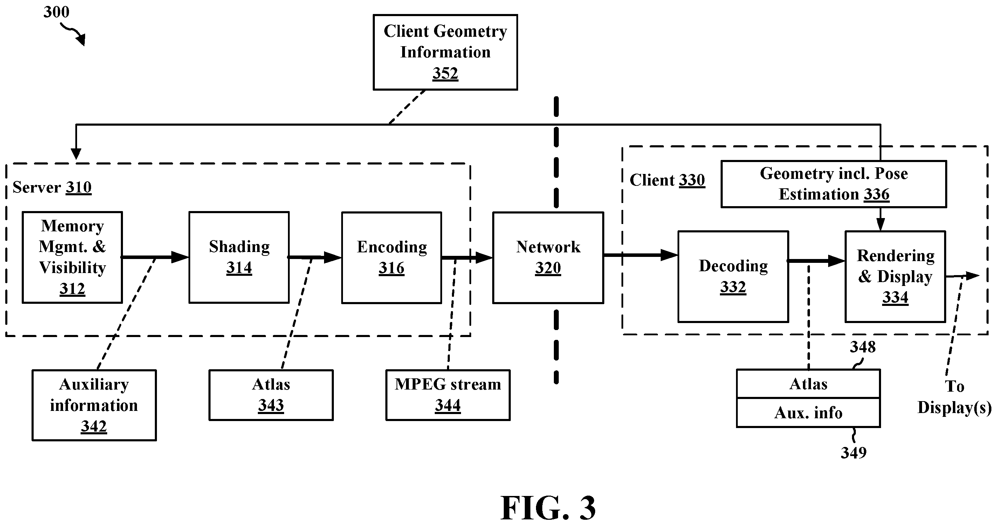

FIG. 3 illustrates a vector streaming architecture 300 including the information transfer protocol between server 310 and client device 330 (hereinafter "client 330"). Architecture 300 includes server 310, network 320, and client 330. As shown in FIG. 3, the server 310 includes memory management and visibility stage 312, shading stage 314, and encoding stage 316. The client device 330 can include decoding stage 332, rendering and display stage 334, and pose estimation stage 336.

As shown in FIG. 3, memory management and visibility stage 312 may determine the visible and potentially visible scene primitives that need to be sent to the client. Based on this information, server 310 determines which polygons need to be shaded, and where in the atlas they will fit. This information is supplied to the shading stage 314. The shading stage 314 may determine the relevant textures inside the shading atlas 343 to be sent to the client 330 for the current frame. The shading atlas 343 may contain all potentially visible surfaces in an XR scene packed as shaded textures. The encoding stage 316 may be responsible for encoding the series of shading atlas frames into an MPEG stream 344. MPEG stream 344 (including the encoded shading atlases 343) can be transferred between the server 310 and the client 330 via the network 320. The client 330 decodes streams received over the network 320 in the decoding stage 332. After decoding, shading atlas 348 and auxiliary information 349 can be used by the rendering and display stage 334 along with the most recent pose information 352, e.g., in order to render and display left and right eye buffers.

In some aspects of split rendering, decisions corresponding to object geometry can be resolved during a visibility pass, e.g., in a game engine. In split rendering XR systems, the game engine can reside on the server 310. A visibility pass, e.g., in memory management and visibility stage 312, can consider the pose of all the relevant objects, e.g., both real-world objects and CG objects in the current camera frustum (dependent on camera/client 330 pose) and/or determine which triangles are visible or potentially visible from the current camera pose.

Split rendering architectures also can introduce latency when delivering the rendered content to the client 330 display. In some aspects, this latency, measured between the instance a client pose was determined, until the instance the CG content corresponding to this client pose is shown in the client display, can be even higher when shading occurs wholly or in part on a server 310 than when compared to client device 330 rendering. But in such setups where shading is done on the server can also enable more complex XR graphics. For instance, a certain amount of latency may always be present in split rendering architectures, and different split rendering systems may incorporate different mechanisms for dealing with or compensating for the latency.

In vector streaming systems, e.g., split rendering systems based on object-space rendering representation (SRS OSRR), the server 310 can stream the appearance in object space of the various objects, as well as the geometry of these objects. The object surfaces shaded on the server end can include currently visible surfaces given the most recent client pose, but also potentially visible surfaces that may be revealed following slight motion of the client device in the vicinity of the original pose. In the latter stages of processing, e.g., prior to a display, the client 330 can rasterize the geometry of the visible objects and/or texture-map the corresponding textures based on the most recent local pose information. This variant of pre-display processing may be inherently free of residual pose-to-display latency, since the most recent available pose is used to re-render the content just in time for display. This variant of pre-display processing may not distort the shape of the objects and may be capable of preserving the screen-space displacements of various elements of the mixed reality scene as they naturally would appear based on the depth of the mixed scene content and the relative camera motion. Another aspect of the same property is that the occluding/occluded surfaces may appear as expected, in other words, certain surfaces may be dis-occluded as a result of latent camera motion, and other surfaces may be occluded more than they were at the time of server rendering. It is noted that any references to a camera herein can refer to multiple cameras, a virtual camera, a client device, a display, multiple displays, and/or a HMD.

Vector streaming systems or SRS OSRR can also stream different types of information. For instance, in vector streaming architecture 300, a server 310 can produce 1) shading atlas information 343, e.g., a representation of the textures in a scene, and 2) auxiliary information 342, e.g., information regarding the geometry/meshes of objects and the potentially visible polygons in those meshes as seen in a frame to be sent to a client 330, as well as any additional information describing the mapping between the potentially visible polygons and the textures shaded in the shading atlas. In some aspects, this shading atlas information can be sent as time-evolving textures, and encoded as video, e.g., by encoding stage 316. In some aspects, the auxiliary information 342 may in part represent the meshes or partial meshes of CG objects and can be transported raw or encoded using mesh compression methods. The client device 330 can receive both a shading atlas 343 and auxiliary information 342 corresponding to a pose *T*₀ or the server frame, it can decode 332 this information, and use it to render the final eye buffer representations of the scene utilizing the most recent pose *T*₁. Since the pose *T*₁ may be newer and more up-to-date than pose *T*₀, the described system may be less latency-limiting than that of other split rendering architectures.

The client device 330 can rasterize this shading atlas 348 and auxiliary information 349 using the most recent pose *T*₁, i.e., convert this information into pixels that can be displayed on the client 330. Additionally, in some aspects, the server 310 can receive a pose information 352 that was streamed from the client device 330, and then perform visibility 312 and shading 314 computations based on this received pose information 352, or multiple received poses, or a time-advanced/predicted version of the received poses. Visibility computations 312 may affect which meshes (geometry) or portions of meshes can be sent to the client device 330, and shading computations 314 can include shading the surfaces corresponding to the meshes or portions of meshes that need update in the current frame, which can also be sent to the client 330. Examples of the technology disclosed herein can also assume that the client 330 has information regarding these meshes, so that the geometry may not need to be streamed real-time to the client device 330. For example, the server 310 can compute the shading on an object, e.g., which can change based on the vantage point of the camera, e.g., a virtual camera in a game engine and/or the game state, and the client 330 may already have knowledge of the scene geometry information, thus it only needs to incorporate the freshly-received shading information.

In some aspects, real-world objects in a mixed reality scene can be represented on the client device 330 as a mesh describing the location, shape, and size of the objects. Moreover, this mesh geometry representation can be determined or known at the server 310 and/or the client 330. The real-world geometry information is needed in order to compose a fully immersive mixed reality scene. In some instances knowing the geometry of real-world objects can enable the XR system to "occlude" parts of the CG content that is meant to appear behind a real-world object. This information can also be used to compute the resulting lighting when shading the CG content as well as the resulting shadow effects on real-world objects cast by CG content. These are some examples where real-world geometry may be useful to an immersive XR system.

If the real-world geometry information is known at the client 330 as well as the server 310, then some of the information for representing the real-world content may not need to be transmitted by the server 310. Moreover, having the real-world meshing capability on the client device 330 has its benefits from a latency point of view. If the real-world scene is not entirely static, i.e., it contains moving or deformable objects, the latency included in the system of meshing the world entirely on the server 310 and bringing the mesh information to the rasterization at the client 330 may start to play a factor in a user experience. Client devices 330 with on-device meshing capability may be at an advantage because their real-world representation component may incur lower latencies, thus corresponding more closely to the actual see-through scene.

The client 330 can also perform a crude real-world meshing and send this information to the server 310. The server 310 can then perform a bundle adjustment, such that the server 310 compares the real-world observations of the real object made by a client 330 at many distinct points in time, and refines this information into a single compact refined geometry for future representation of real-world objects. Accordingly, real-world content refinement can occur on either the client 330 or the server 310. In some instances, the client 330 may utilize an additional pass for rendering the occluding objects unknown to the server 310, e.g., using the latest real-world object meshes and poses, with the understanding that the texture information corresponding to these objects may in some cases be somewhat incomplete before the update from the server 310 is received.

As indicated above, split rendering for XR can include a method for bringing content to headsets or HMDs (i.e., client device 330) where a portion of the graphics processing is performed outside the headset, e.g., on a server 310. In addition, mixed reality XR can include a portion of the screen that corresponds to real-world content and is displayed either in an optical see-through or video see-through device. So in XR, the objects viewed in the headset or HMD can be a mix of real-world content and CG content (e.g., animated content or augmentations).

In order to make the CG objects and shadows cast by them look realistic, a number of different steps or processes can be performed. For example, the lighting or shadows from CG objects can realistically project onto real-world objects, or vice versa. As such, real-world objects and CG objects can cast shadows on one another. For example, if CG object is blocking or occluding a real-world object from a light source in the object space, then the CG object can cast a shadow onto the real-world object and thus the real-world object's appearance may need to be modified when presented to the viewer. In split rendering systems, some of this computation can be offloaded to the server.

However, the aforementioned shadows cast by CG objects on real-world objects can provide a number of challenges. For instance, the split rendering system generates the shadow information on a first device, e.g., server 310, before the shadow information is transported to a second device, e.g., client 330. The client 330 receives, decodes, and interprets this information and modifies its display values accordingly. Thus, the signal carrying the shadow information, which is supposed to affect the real-object surfaces upon display, is subject to potentially high system latency, while the real-world objects themselves appear with no latency in the second device (optical see-through devices), or relatively insignificant latency (video see-through devices). As such, shadow information (from CG objects) may be subject to lags that can manifest themselves, for instance, in an inaccurate display position, shape, and area that is affected by shadows. Given that the object surfaces (either real world or CG) that are expected to be receptors of shadows may "move" on the display with little to no delay compared to the displaying device motion, it can be a challenge to provide an accurate depiction of shadows cast on real-world objects and augmented objects with the same fidelity and little or no perceivable artifacts.

Examples of the technology disclosed herein can address the aforementioned issues with shadows cast on real-world objects by CG objects. Examples of the technology disclosed herein can generate the shadow information on the first device, e.g., server 310, and make use of this shadow information on the second device, e.g., client 330, in such way that it appears to the end user operating the second device that the CG-object-on-real-world-object shadows are generated locally at minimal-to-no delay. In addition, the shadow information can be provided to the second device not only for real-world object surfaces that are visible when the server begins the split rendering process, but also for those surfaces that may become visible in a very near future as the second device is being moved around. This aspect helps the second device portray shadows on surfaces that were not visible from the second device's perspective at the time when the first device was generating the shadow information, but become visible or get revealed/dis-occluded between that time and the time when the shadow information is used on the second device to change the scene appearance on the display. In addition, examples of the technology disclosed herein can provide an accurate depiction of shadows cast by CG objects on real-world objects. By doing so, examples of the technology disclosed herein can help to achieve a more realistic and immersive XR experience.

In some examples, the technology disclosed herein can process the aforementioned shadow information in a vector streaming pipeline architecture, such as the vector streaming pipeline architecture 300 illustrated in FIG. 3. For instance, geometry information about the real-world surfaces, e.g., via spatial maps, may be available at the server 310 resulting from an online or offline meshing. This auxiliary information 342 can also be available on the client device 330, e.g., if the client 330 performs a surface meshing. Additionally, the light estimation in a scene can be performed on the client 330 or at a server 310 and light-source information can be available at the server 310 during the time of shading computations. Some examples of the technology disclosed herein can be performed with a client 330 that is a headset or HMD utilizing video see-through displays or optical see-through displays for displaying objects and surfaces rendered per client 330 pose.

In order to accurately simulate shadows cast by CG objects on real-world objects, the geometry information of the real-world objects can be determined. In some instances, this can be achieved by a combination of computer vision techniques, three-dimensional (3D) reconstruction, and/or meshing. In one instance, the meshing can run real-time on the client 330 and the reconstructed geometry can be transferred to the server 310. In another instance, the client 330 can capture images in a sequence and transmit them to the server 310, which can perform the 3D reconstruction and/or meshing algorithms to extract 3D mesh information about the objects visible in the real-world scene. For instance, in some examples of the technology disclosed herein, a real-world 3D mesh can be determined. Accordingly, the geometry of the real-world objects can be available on the client 330 and sent to the server 310, or vice versa. This geometric representation can be adjusted and become more precise over time as more observations of the same real-world objects or CG objects become available. By doing so, the geometry information regarding the objects may become increasingly precise over time.

Examples of the technology disclosed herein can include a number of different steps or processes to handle shadows cast by CG objects in split rendering. For example, examples of the technology disclosed herein can determine, e.g., via a server 310, which real-world surfaces are visible. Starting from these visible surfaces, the server 310 can determine which visible or potentially visible real-world surfaces are receiving shadows from CG content. Additionally, the server 310 can calculate shadow factors, e.g., with a value of 0 to 1, for these surfaces, which serve to quantify how much of the incident light is attenuated/blocked before reaching a surface. After this, the server 310 can store the shadow information including shadow factors. For example, a value of 0 may correspond to no shadow, and a value of 1 may correspond to maximum light attenuation on a video see-through pixel. Moreover, the server 310 can stream information about which geometry rendered on the client device 330 needs the corresponding textures to be treated as shadow material, e.g., by rendering the corresponding surface in the shading atlas as a transparency.

In addition, the client device 330 can render CG surfaces, as well as real-world surfaces in essence, translating from the object space to a display frame space. The client device 330 can sample the shadow factors and/or utilize meshes of CG objects and real-world objects. In some instances, the meshes of real-world objects can be estimated on the client device 330 or server. These meshes of real-world objects can be assumed to be known by the server and the client device 330. For example, the geometry, size, and/or shape of the meshes can be assumed to be known by the server and the client device 330.

In some examples, the technology disclosed herein can calculate shadow information for a CG object that casts a shadow on a real-world object. The shadow information calculated on the server 310 covers both visible and potentially visible real-world objects even though not all objects may appear in the display at the same time on the client device 330. Additionally, as mentioned above, XR applications herein can access geometry information of all objects in a mixed reality scene: both real objects and CG objects for describing shadows or occlusions.

In some instances, when shadow information is being calculated about shadows cast on a real-world object by a CG object, a component of a shading atlas can be utilized to store the corresponding shadow mask information (e.g., as shadow factors). Conversely, when information is calculated regarding shadows cast on CG object, this can be automatically included in the shading atlas regular surfaces. So when CG content casts a shadow on a real-world object, or when a real-world object casts a shadow on CG content, examples of the technology disclosed herein can determine corresponding information to be included in a shading atlas. However, when a real-world object casts a shadow on a real-world object, the present disclosure may not make any determination or utilize information in a shading atlas, as this information already may be included in the visible scene.

In some aspects, if a CG object is casting a shadow on a real-world object, the portion of the real-world object can be modulated so that the illumination perceived by the viewer on that portion of the real-world object through the display may be reduced or dampened. This shadow information can be included in a shadow mask, or a shadow texture, and consumed on the client as a shadow material. Accordingly, a shadow material can be applied to a real-world object upon rendering at the client 330 when a shadow is cast on the real-world object by a CG object. By doing so, the effect of real world or CG light sources can be simulated on real-world or CG objects in a uniform way on the server and transported to and applied on the client accordingly.

As indicated above, examples of the technology disclosed herein can determine the amount of light that is received by and reflected off CG objects or real-world objects. Such examples can also determine the portion of the CG object or real-world object that will be affected by this light. The corresponding shadow information for the object can then be computed in a simplified manner and stored in a shadow mask or shadow texture as shadow factors. If a real-world object may need to be portrayed with a shadow cast by a CG object, the client 330 may utilize the shadow factors from the shadow mask included in the shading atlas to render the shadow material that covers the corresponding object mesh.

In some aspects, the client device 330 can rasterize the meshes and texture map the surfaces as if the shadows were not present. This may be the case if the system does not have the capability of portraying the shadows on real-world objects or does not have capability to estimate the geometry of real world objects & surfaces. Additionally, some real-world object surfaces may not be included in the shading atlas, as these objects may not be the receptors of any shadows and as such may not need any draw calls. For instance, some real-world objects may not be receiving any shadows from or be occluded by CG objects; they should appear as viewed without a headset or HMD, so the atlas may not need to include information regarding these real-world objects. As indicated above, the shading atlas may include a variety of shadow information for any shadows cast on augmented content and/or any shadows cast by real-world objects on augmented content. Note that the shading atlas contains information about shades of texels, not just shadows. Shadows can influence how texels look. However, texel shades may be dependent on a number of other factors. In addition to simple shades of texels, the shading atlas may also be utilized to carry shadow mask information for certain real-world objects. The latter is not atlas's main function, but it can be utilized for this purpose, as in examples of the technology disclosed herein. Alternatively, shadow masks can be sent in a separate texture to the client.

As indicated previously, the shadow information can be included in shadow masks that may be inserted in the shading atlas. Besides shadow mask information which describes the real-world light sources which have been partially occluded by the CG objects from the point of view of a real-world object, in some instances the client 330 also needs to receive a list of patch identifiers describing the real-world object surfaces which are affected by these shadows. After this information is received, real-world objects that are affected by CG shadows can be modified in appearance on the client by additionally rendering this information described by the shadow masks and the patch identifiers, and as a result appear more realistic.

As indicated above, examples of the technology disclosed herein can modify the perceived illumination of a real-world object, e.g., as seen through a headset, based on shadow information when a shadow is cast on the real-world object from an animated object. In video see-through devices the shades/colors corresponding to shadow-receiving real-world materials can be appropriately modified/darkened to faithfully portray the effect of shadow-casting. In optical see-through devices, the amount of light reaching the eye from a particular direction (given by the screen-projection of the shadow-receiving surfaces) needs to be attenuated by the headset medium.

Examples of the technology disclosed herein can also address a number of the aforementioned shadow issues. For instance, under high latency, shadows may suffer from geometric deformations if not described in a way that remains accurate after a certain amount of headset displacement from the position used to shade the scene. As indicated herein, examples of the technology disclosed herein can address and improve issues with portraying shadows, e.g., in a traditional, billboard-represented manner. In addition, shadows may display jitter and/or not adhere well to the object surfaces when not accompanied by precise geometric description of the surfaces they need to adhere to. Further, shadows or other indirect lighting contributions may utilize an increased amount of bandwidth, in addition to the color and alpha video used for the XR content. As indicated herein, split rendering methods according to examples of the technology disclosed herein can address each of these issues, such as by reducing sensitivity to latency, and/or increasing the accuracy and seamlessness of shadows on real-world objects even when cast by a non-static CG content. In order to do so, examples of the technology disclosed herein can transmit shading information corresponding to visible and potentially visible real-world or augmented surfaces in a shading atlas, which can be optimized for efficient storage, and doing so in a way which remains accurate under a certain amount of headset displacement.

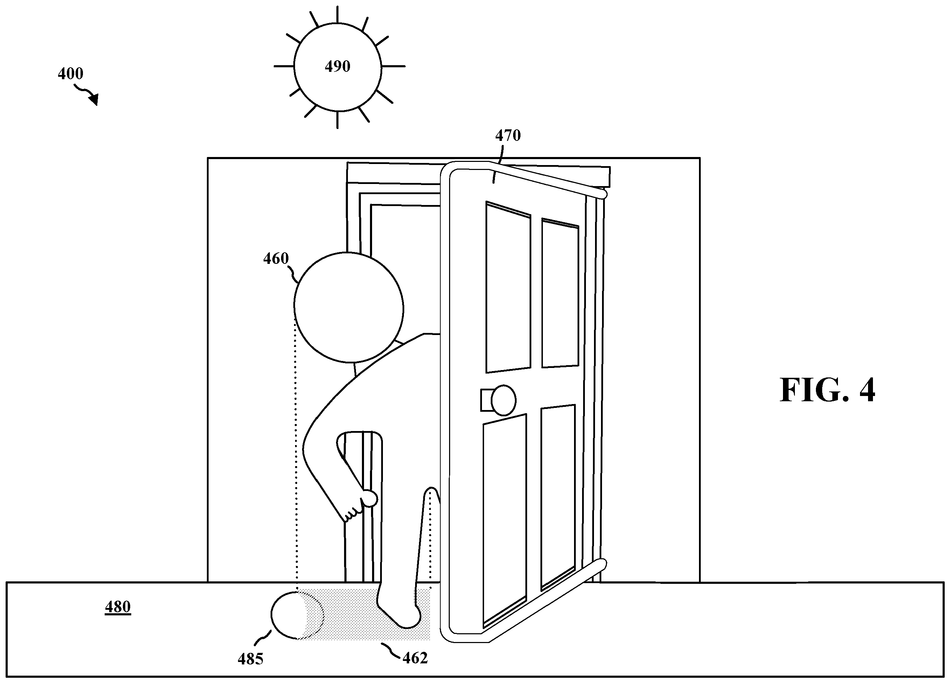

FIG. 4 illustrates an example image or scene 400 illustrative of one or more examples of the technology disclosed herein. Scene 400 includes CG surface or object 460, real-world surface or object 470, real-world surface or object 480, real world object (a ball) 485, and light source 490. Additionally, scene 400 includes shadow 462 cast by CG object 460 based on light source 490. FIG. 4 displays that the CG object 460, e.g., a person, is between the light source 490 and the real-world object 480 and real-world object 484. As shown in FIG. 4, CG content 460 casts a shadow, e.g., shadow 462, onto both real-world object 480 and real-world object 485, where the shape and the extent of this shadow depends on the light source 490 and CG content 460 location and shape (geometry), as well as the geometry of the real-world surfaces 480 and 485 receiving this shadow.

As described below reference to FIG. 4, examples of the technology disclosed herein can accurately depict when CG content 460 is between a light source 490 (real-world or CG) and real-world objects (ground 480 and ball 485). As such, examples of the technology disclosed herein can accurately depict when shadows are cast onto real-world objects from CG content. Examples of the technology disclosed herein, e.g., server 310 and client 330s herein, can perform a number of different steps or processes to accurately depict shadows cast on real-world by CG content even under significant latency between the moment when the shadow information is computed and the moment when it is used by client 330.

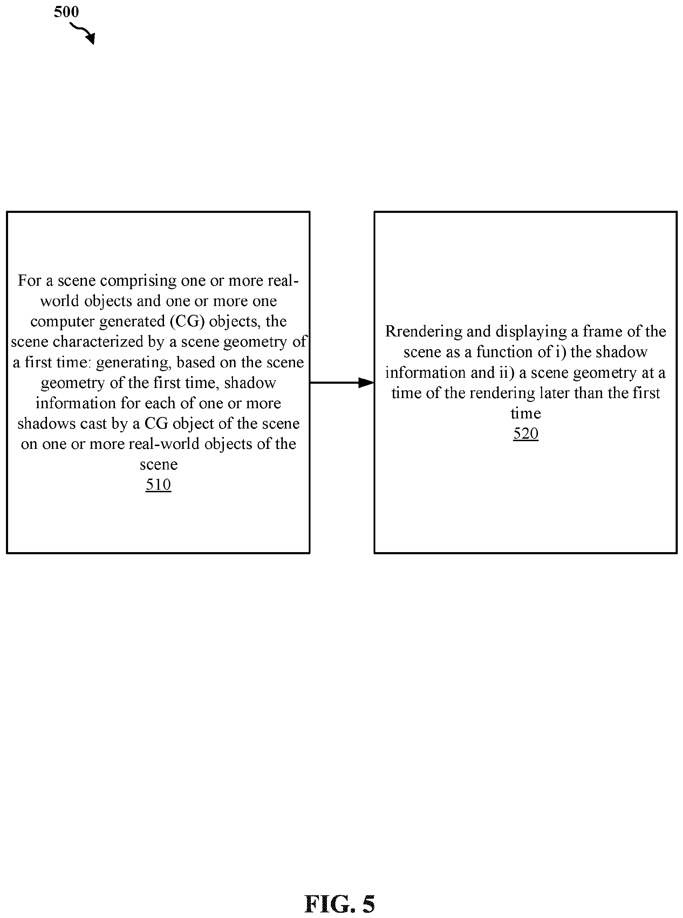

Referring to FIG. 5, and continuing to refer to prior figures for context, a flowchart of an example method 500 in accordance with one or more techniques of this disclosure is shown.

Consider a scene comprising one or more real-world objects and one or more one computer generated (CG) objects. The scene is characterized by a scene geometry of a first time. The method 500 generates, based on the scene geometry of the first time, shadow information for each of one or more shadows cast by a CG object of the scene on one or more real-world objects of the scene - **Block** 510. In a continuing example, consider scene 400 including CG object 460, real-world object 470, real-world object 480, real world ball 485, and light source 490. The scene is characterized by auxiliary information 342 regarding the scene geometry of objects and the potentially visible polygons in those meshes as seen in the frame. The method 500 generates shadow information for the shadows 462 cast by CG object 460 blocking light source 490 from the surfaces of real world objects floor 480 and ball 485. In some examples, the method generates shadow information for each of one or more shadows cast by a CG object of the scene on one or more real-world objects of the scene by at least partially blocking one or more real light sources in the scene.

In certain examples, a method or apparatus for graphics processing is provided. The apparatus may be one or more of a server, a client device, a CPU, a GPU, or some other processor that can perform graphics processing. In one aspect, the apparatus may be the processing unit 120 within the device 104 or may be some other hardware within device 104 or another device. The apparatus may include means for generating, based on the scene geometry of the first time, shadow information for each of one or more shadows cast by a CG object of the scene on one or more real-world objects of the scene.

Returning to FIG. 5, the method 500 renders and displays a frame of the scene as a function of i) the shadow information and ii) a scene geometry at a time of the rendering later than the first time - **Block 520.** In the continuing example, the method 500 renders and displays a frame of scene 400 as a function of the shadow information for the shadows 462 cast by CG object 460 blocking light source 490 from the surfaces of real world objects floor 480 and ball 485 and the scene geometry that has changed since generating the shadow information.

In the certain examples, the apparatus may be the processing unit 120 within the device 104 or may be some other hardware within device 104 or another device. The apparatus may include means for rendering and displaying a frame of the scene as a function of i) the shadow information and ii) a scene geometry at a time of the rendering later than the first time.

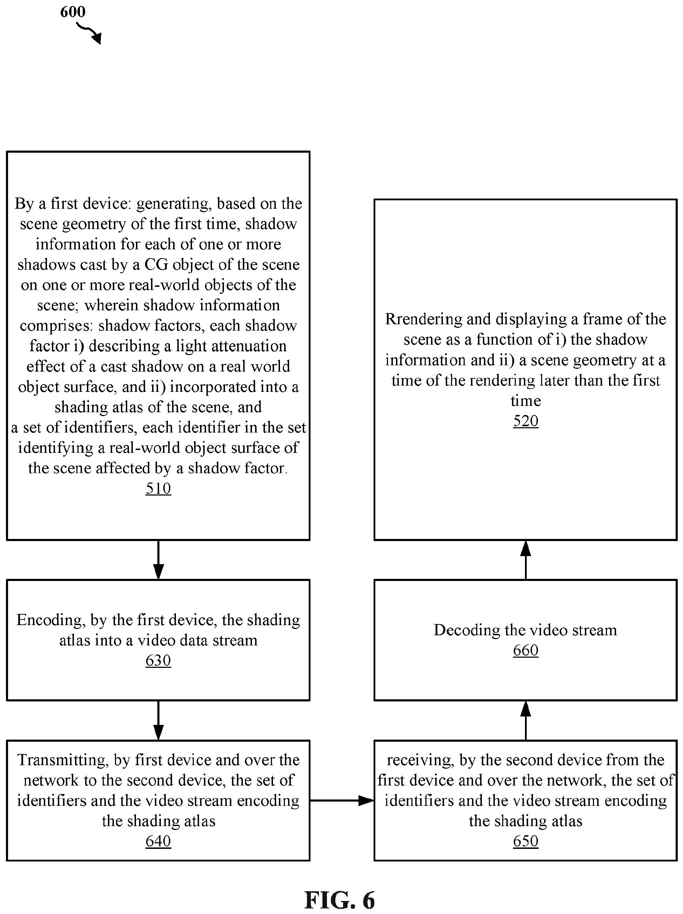

Referring to FIG. 6, and continuing to refer to prior figures for context, a flowchart of an example method 600 in accordance with one or more techniques of this disclosure is shown. In such a method 600, the shadow information includes shadow factors and a set of identifiers. Each shadow factor describes a light attenuation effect of a cast shadow on a real world object surface. Each shadow factor is incorporated into a shading atlas of the scene. Each identifier in the set identifies a real-world object surface of the scene affected by a shadow factor. In such methods 600, the generating of Block 510 is performed by a first device; and the rendering and displaying of Block 520 are performed by a second device. The first device is in communication with the second device over a network. In some examples, the second device is one of a video see-through device or an optical see-through device.

In such methods 600, the first device, prior to the rendering, encodes the shading atlas into a video data stream - **Block 630.** In the continuing example, the first device is a server 310. Server 310 encodes the atlas 343 into an MPEG stream 344 in encoding stage 316. In the certain examples, the apparatus may include means for, prior to the rendering, encoding the shading atlas into a video data stream.

The first device transmits, over the network to the second device, the set of identifiers and the video stream encoding the shading atlas - **Block 640.** In the continuing example, server 310 transmits both the set of identifiers and the MPEG stream encoding the shading atlas 343 over network 320 to client 330. In the certain examples, the apparatus may include means for transmitting, over the network to the second device, the set of identifiers and the video stream encoding the shading atlas.

The second device receives, from the first device and over the network, the set of identifiers and the video stream encoding the shading atlas - **Block 650.** In the continuing example, the client 330 receives the MPEG stream 344 and the set of identifiers transmitted by the server 310 over network 320. In the certain examples, the apparatus may include means for receiving, from the first device and over the network, the set of identifiers and the video stream encoding the shading atlas.

The second device decodes the video stream - **Block 660.** In the continuing example, the client 330 decodes MPEG stream 344 to reveal shading atlas 348 and auxiliary information 349 that includes the set of identifiers. In the certain examples, the apparatus may include means for decoding the video stream.

In the continuing example, the client 330 then renders and displays 334 a frame of the scene 400 as a function of i) the shadow information from the decoded shading atlas 348 and the set of identifiers and ii) a scene geometry, such as from geometry and pose estimation 336 at a time of the rendering. The time of rendering is later then the first time for which scene geometry was used in the server 310 to generate the shadow information - primarily due to latency in processing and communication from the server 310 to the client 330. The more current scene geometry and pose estimation 336 at the client 330 at the time of rendering and display will mitigate the effects of that latency.

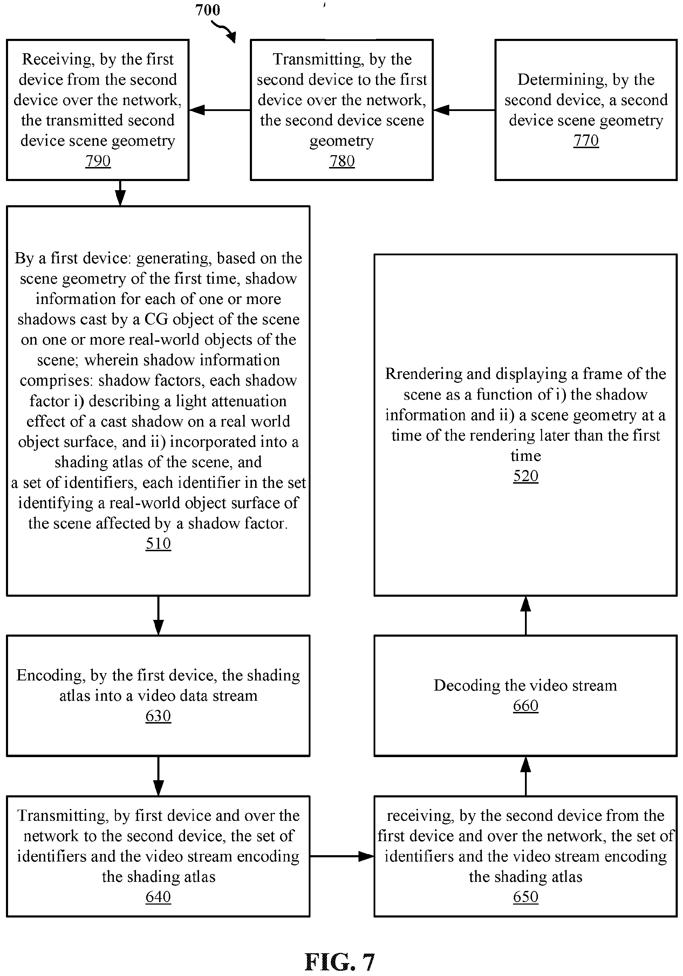

Referring to FIG. 7, and continuing to refer to prior figures for context, a flowchart of an example method 700 in accordance with one or more techniques of this disclosure is shown. In such a method 700, Block 510, Block 520, and Blocks 630-660 are performed as described above in connection with FIG. 5 and FIG. 6. In such a method 700, prior to the generating, the second device determines a second device scene geometry - **Block 770.** In the continuing example, geometry and pose estimation 336 of client 330 determines second device geometry information. The second device scene geometry can include one or more of pose information of the second device, image information captured by the second device, or mesh information of the second device. In the certain examples, the apparatus may include means for determining, by the second device, a second device scene geometry.

The second device transmits, to the first device and over the network, the second device scene geometry - **Block 780.** In the continuing example, the client 330 transmits second device geometry to the server 310 over the network 320. In the certain examples, the apparatus may include means for transmitting, to the first device and over the network, the second device scene geometry.

The first device receives, from the second device over the network, the transmitted second device scene geometry - **Block 790.** In the continuing example, the server 310 receives, from the client 330 over the network 320, the transmitted client 330 scene geometry determined by the geometry and pose estimation stage 336 of the client. The received scene geometry is the scene geometry of the first time that the server will use generating shadow information as described in conjunction with Block 510 above. In the certain examples, the apparatus may include means for receiving, from the second device over the network, the transmitted second device scene geometry.

The subject matter described herein can be implemented to realize one or more benefits or advantages. For instance, the described graphics processing techniques can be used by a server, a client, a GPU, a CPU, or some other processor that can perform graphics processing to implement the split rendering techniques described herein. This can also be accomplished at a low cost compared to other graphics processing techniques. Moreover, the graphics processing techniques herein can improve or speed up data processing or execution. Further, the graphics processing techniques herein can improve resource or data utilization and/or resource efficiency. Additionally, examples of the technology disclosed herein can utilize a split rendering process that can increase the accuracy of handling shadows in split rendering with real-world content and augmented content.

In accordance with this disclosure, the term "or" may be interrupted as "and/or" where context does not dictate otherwise. Additionally, while phrases such as "one or more" or "at least one" or the like may have been used for some features disclosed herein but not others, the features for which such language was not used may be interpreted to have such a meaning implied where context does not dictate otherwise.

In one or more examples, the functions described herein may be implemented in hardware, software, firmware, or any combination thereof. For example, although the term "processing unit" has been used throughout this disclosure, such processing units may be implemented in hardware, software, firmware, or any combination thereof. If any function, processing unit, technique described herein, or other module is implemented in software, the function, processing unit, technique described herein, or other module may be stored on or transmitted over as one or more instructions or code on a computer-readable medium. Computer-readable media may include computer data storage media or communication media including any medium that facilitates transfer of a computer program from one place to another. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. By way of example, and not limitation, such computer-readable media can comprise RAM, ROM, EEPROM, CD-ROM or other optical disk storage, magnetic disk storage or other magnetic storage devices. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. A computer program product may include a computer-readable medium.

The code may be executed by one or more processors, such as one or more digital signal processors (DSPs), general purpose microprocessors, application specific integrated circuits (ASICs), arithmetic logic units (ALUs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, the techniques could be fully implemented in one or more circuits or logic elements.

The techniques of this disclosure may be implemented in a wide variety of devices or apparatuses, including a wireless handset, an integrated circuit (IC) or a set of ICs, e.g., a chip set. Various components, modules or units are described in this disclosure to emphasize functional aspects of devices configured to perform the disclosed techniques, but do not necessarily need realization by different hardware units. Rather, as described above, various units may be combined in any hardware unit or provided by a collection of interoperative hardware units, including one or more processors as described above, in conjunction with suitable software and/or firmware.

## Claims

1. A computer graphics processing method (600), comprising:
for a scene comprising one or more real-world objects and one or more one computer generated, CG, objects, the scene **characterized by** a scene geometry of a first time:
generating (510), based on the scene geometry of the first time, shadow information for each of one or more shadows cast by a CG object of the scene on one or more real-world objects of the scene, wherein the shadow information comprises i) shadow factors, each shadow factor describing a light attenuation effect of a cast shadow on a real world object surface and incorporated into a shading atlas of the scene, and ii) and a set of identifiers, each identifier in the set identifying a real-world object surface of the scene affected by a shadow factor;
encoding (630) the shading atlas into a video data stream; and
transmitting (640), over a network to a second device, the set of identifiers and the video stream encoding the shading atlas.

2. The method of claim 1, wherein the video stream is a Moving Picture Experts Group, MPEG, transport stream.

3. The method of claim 1:
the method further comprises, prior to the generating, receiving, from the second device over the network, second device scene geometry;
wherein the scene geometry of the first time is based at least in part on the second device scene geometry.

4. The method of claim 3, wherein the second device scene geometry comprises one or more of: pose information of the second device, two-dimensional information captured by the second device, or mesh information of the second device.

5. The method of claim 1, wherein the second device is one of a video see-through device or an optical see-through device.

6. A computer graphics method (600), comprising:
for a scene comprising one or more real-world objects and one or more one computer generated, CG, objects, the scene **characterized by** a scene geometry of a first time:
receiving (650), by a second device from a first device and over a network, shadow information comprising i) a set of identifiers and ii) a video stream encoding a shading atlas, wherein:
the shading atlas comprises a plurality of shadow factors, each shadow factor describing a light attenuation effect of a shadow cast by a CG object of the scene on one or more real-world objects of the scene, and
each identifier in the set identifies a real-world object of the scene affected by a shadow factor;
decoding (660), by the second device, the video stream; and
rendering and displaying (520), by the second device, a frame of the scene as a function of i) the shadow information and ii) the scene geometry at a time of the rendering later than the first time.

7. The method of claim 6, wherein the video stream is a Moving Picture Experts Group, MPEG, transport stream and/or wherein the method further comprises, prior to the receiving, transmitting, by the second device to the first device and over the network, second device scene geometry;
wherein the scene geometry of the first time is based at least in part on the transmitted second device scene geometry and preferably wherein the transmitted second device scene geometry comprises one or more of: pose information of the second device, two-dimensional information captured by the second device, or mesh information of the second device.

8. The method of claim 6, wherein the second device is one of a video see-through device or an optical see-through device.

9. An apparatus (310) for graphics processing, comprising:
a memory; and
at least one processor coupled to the memory and configured to, for a scene comprising one or more real-world objects and one or more one computer generated, CG, objects and **characterized by** a scene geometry of a first time:
generate, based on the scene geometry of the first time, shadow information for each of one or more shadows cast by a CG object of the scene on one or more real-world objects of the scene, wherein the shadow information comprises i) shadow factors, each shadow factor describing a light attenuation effect of a cast shadow on a real world object surface and incorporated into a shading atlas of the scene, and ii) and a set of identifiers, each identifier in the set identifying a real-world object surface of the scene affected by a shadow factor;
encode (316) the shading atlas into a video data stream; and
transmit, over a network (320) to a second device, the set of identifiers and the video stream encoding the shading atlas.

10. The apparatus of claim 9, wherein the video stream is a Moving Picture Experts Group, MPEG, transport stream and/or wherein the at least one processor is further configured to receive, prior to the generating and from the second device over the network, second device scene geometry, wherein the scene geometry of the first time is based at least in part on the second device scene geometry and preferably wherein the second device scene geometry comprises one or more of: pose information of the second device, two-dimensional information captured by the second device, or mesh information of the second device.

11. The apparatus of claim 9, wherein the second device is one of a video see-through device or an optical see-through device.

12. An apparatus (330) for computer graphics processing, comprising:
for a scene comprising one or more real-world objects and one or more one computer generated, CG, objects, the scene **characterized by** a scene geometry of a first time:
means for receiving, by a second device from a first device and over a network, shadow information comprising i) a set of identifiers and ii) a video stream encoding a shading atlas, wherein:
the shading atlas comprises a plurality of shadow factors, each shadow factor describing a light attenuation effect of a shadow cast by a CG object of the scene on one or more real-world objects of the scene, and
each identifier in the set identifies a real-world object of the scene affected by a shadow factor;
means for decoding (332), by the second device, the video stream; and
means for rendering and displaying (334), by the second device, a frame of the scene as a function of i) the shadow information and ii) the scene geometry at a time of the rendering later than the first time.

13. The apparatus of claim 12, wherein the video stream is a Moving Picture Experts Group, MPEG, transport stream and/or wherein the apparatus further comprises means for transmitting, by the second device to the first device and over the network prior to the receiving, second device scene geometry, and wherein the scene geometry of the first time is based at least in part on the transmitted second device scene geometry and preferably wherein the transmitted second device scene geometry comprises one or more of: pose information of the second device, two-dimensional information captured by the second device, or mesh information of the second device.

14. The apparatus of claim 12, wherein the second device is one of a video see-through device or an optical see-through device.

15. A computer-readable medium storing computer executable code for graphics processing, comprising code to execute the method of any one of claims 1 to 8.

## Patentansprüche

1. Computergrafikverarbeitungsverfahren (600), das Folgendes beinhaltet:
für eine Szene, die ein oder mehrere reale Objekte und ein oder mehrere CG-(Computer generated)-Objekte umfasst, wobei die Szene **gekennzeichnet ist durch** eine Szenengeometrie zu einem ersten Zeitpunkt:
Erzeugen (510), auf der Basis der Szenengeometrie des ersten Zeitpunkts, von Schatteninformationen für jeden von einem oder mehreren von einem CG-Objekt der Szene auf ein oder mehrere reale Objekte der Szene geworfenen Schatten, wobei die Schatteninformationen Folgendes umfassen: i) Schattenfaktoren, wobei jeder Schattenfaktor einen Lichtabschwächungseffekt eines geworfenen Schattens auf eine reale Objektoberfläche beschreibt und in einen Shading-Atlas der Szene aufgenommen wird, und ii) einen Satz von Kennungen, wobei jede Kennung in dem Satz eine reale Objektoberfläche der von einem Schattenfaktor beeinflussten Szene identifiziert;
Encodieren (630) des Shading-Atlas in einen Videodatenstrom; und
Senden (640), über ein Netzwerk zu einem zweiten Gerät, des Satzes von Kennungen und des den Shading-Atlas encodierenden Videostroms.

2. Verfahren nach Anspruch 1, wobei der Videostrom ein MPEG-(Moving Picture Experts Group)-Transportstrom ist.

3. Verfahren nach Anspruch 1,
wobei das Verfahren ferner, vor dem Erzeugen, das Empfangen einer Szenengeometrie des zweiten Geräts von dem zweiten Gerät über das Netzwerk beinhaltet;
wobei die Szenengeometrie des ersten Zeitpunkts zumindest teilweise auf der Szenengeometrie des zweiten Geräts basiert.

4. Verfahren nach Anspruch 3, wobei die Szenengeometrie des zweiten Geräts eines oder mehrere von:
Poseninformationen des zweiten Geräts, vom zweiten Gerät erfasste zweidimensionale Informationen und Netzinformationen des zweiten Geräts umfasst.

5. Verfahren nach Anspruch 1, wobei das zweite Gerät entweder ein Video-See-Through-Gerät oder ein optisches See-Through-Gerät ist.

6. Computergrafikverfahren (600), das Folgendes beinhaltet:
für eine Szene, die ein oder mehrere reale Objekte und ein oder mehrere CG-(Computer Generated)-Objekte umfasst, wobei die Szene **gekennzeichnet ist durch** eine Szenengeometrie eines ersten Zeitpunkts:
Empfangen (650), durch ein zweites Gerät von einem ersten Gerät und über ein Netzwerk, von Schatteninformationen, die Folgendes umfassen: i) einen Satz von Kennungen, und ii) einen Videostream, der einen Shadowing-Atlas encodiert, wobei:
der Shading-Atlas mehrere Schattenfaktoren umfasst, wobei jeder Schattenfaktor einen Lichtabschwächungseffekt eines von einem CG-Objekt der Szene auf ein oder mehrere reale Objekte der Szene geworfenen Schattens beschreibt und
jede Kennung in dem Satz ein reales Objekt der von einem Schattenfaktor beeinflussten Szene identifiziert;
Decodieren (660) des Videostroms durch das zweite Gerät; und
Rendern und Anzeigen (520), durch das zweite Gerät, eines Frame der Szene als Funktion von i) den Schatteninformationen und ii) der Szenengeometrie zu einem Zeitpunkt des Renderings, der später als der erste Zeitpunkt liegt.

7. Verfahren nach Anspruch 6, wobei der Videostream ein MPEG-(Moving Picture Experts Group)-Transportstream ist, und/oder wobei das Verfahren ferner, vor dem Empfangen, das Senden der Szenengeometrie des zweiten Geräts vom zweiten Gerät zum ersten Gerät und über das Netzwerk beinhaltet;
wobei die Szenengeometrie des ersten Zeitpunkts zumindest teilweise auf der gesendeten Szenengeometrie des zweiten Geräts basiert und wobei die gesendete Szenengeometrie des zweiten Geräts vorzugsweise eines oder mehrere von: Poseninformationen des zweiten Geräts, vom zweiten Gerät erfasste zweidimensionale Informationen oder Netzwerkinformationen des zweiten Geräts umfasst.

8. Verfahren nach Anspruch 6, wobei das zweite Gerät entweder ein Video-See-Through-Gerät oder ein optisches See-Through-Gerät ist.

9. Vorrichtung (310) zur Grafikverarbeitung, die Folgendes umfasst:
einen Speicher; und
mindestens einen mit dem Speicher gekoppelten Prozessor, konfiguriert zum, für eine Szene, die ein oder mehrere reale Objekte und ein oder mehrere CG-(Computer generated)-Objekte umfasst, und **gekennzeichnet durch** eine Szenengeometrie eines ersten Zeitpunkts:
Erzeugen, auf der Basis der Szenengeometrie des ersten Zeitpunkts, von Schatteninformationen für jeden von einem oder mehreren von einem CG-Objekt der Szene auf ein oder mehrere reale Objekte der Szene geworfenen Schatten, wobei die Schatteninformationen Folgendes umfassen: i) Schattenfaktoren, wobei jeder Schattenfaktor einen Lichtabschwächungseffekt eines geworfenen Schattens auf eine reale Objektoberfläche beschreibt und in einen Shading-Atlas der Szene aufgenommen wird, und ii) einen Satz von Kennungen, wobei jede Kennung in dem Satz eine reale Objektoberfläche der von einem Schattenfaktor beeinflussten Szene identifiziert;
Encodieren (316) des Shading-Atlas in einen Videodatenstrom; und
Senden, über ein Netzwerk (320) zu einem zweiten Gerät, des Satzes von Kennungen und des den Shading-Atlas encodierenden Videostroms.

10. Vorrichtung nach Anspruch 9, wobei der Videostrom ein MPEG-(Moving Picture Experts Group)-Transportstrom ist und/oder wobei der mindestens eine Prozessor ferner konfiguriert ist zum, vor der Erzeugung und von dem zweiten Gerät über das Netzwerk, Empfangen der Szenengeometrie des zweiten Geräts, wobei die Szenengeometrie des ersten Zeitpunkts zumindest teilweise auf der Szenengeometrie des zweiten Geräts basiert, und wobei die Szenengeometrie des zweiten Geräts vorzugsweise eines oder mehrere umfasst von: Poseninformationen des zweiten Geräts, vom zweiten Gerät erfassten zweidimensionalen Informationen oder Netzinformationen des zweiten Geräts.

11. Vorrichtung nach Anspruch 9, wobei das zweite Gerät entweder ein Video-See-Through-Gerät oder ein optisches See-Through-Gerät ist.

12. Vorrichtung (330) zur Computergrafikverarbeitung, die Folgendes umfasst:
für eine Szene, die ein oder mehrere reale Objekte und ein oder mehrere CG-(Computer Generated)-Objekte umfasst, wobei die Szene durch eine Szenengeometrie eines ersten Zeitpunkts gekennzeichnet ist:
Mittel zum Empfangen, durch ein zweites Gerät von einem ersten Gerät und über ein Netzwerk, von Schatteninformationen, die Folgendes umfassen: i) einen Satz von Kennungen und ii) einen einen Shading-Atlas encodierenden Videostream, wobei:
der Shading-Atlas mehrere Schattenfaktoren umfasst, wobei jeder Schattenfaktor einen Lichtabschwächungseffekt eines von einem CG-Objekt der Szene auf ein oder mehrere reale Objekte der Szene geworfenen Schattens beschreibt, und
jede Kennung in dem Satz ein reales Objekt der von einem Schattenfaktor beeinflussten Szene identifiziert;
Mittel zum Decodieren (332) des Videostroms durch das zweite Gerät; und
Mittel zum Rendern und Anzeigen (334) eines Bildes der Szene durch das zweite Gerät als Funktion von i) den Schatteninformationen und ii) der Szenengeometrie zu einem Zeitpunkt des Renderns, der später als der erste Zeitpunkt ist.

13. Vorrichtung nach Anspruch 12, wobei der Videostream ein MPEG-(Moving Picture Experts Group)-Transportstream ist, und/oder wobei die Vorrichtung ferner Mittel zum Senden, durch das zweite Gerät zum ersten Gerät und über das Netzwerk vor dem Empfangen, der Szenengeometrie des zweiten Geräts umfasst, wobei die Szenengeometrie des ersten Zeitpunkts zumindest teilweise auf der gesendeten Szenengeometrie des zweiten Geräts basiert und wobei die gesendete Szenengeometrie des zweiten Geräts vorzugsweise eines oder mehrere von: Poseninformationen des zweiten Geräts, vom zweiten Gerät erfasste zweidimensionale Informationen oder Netzwerkinformationen des zweiten Geräts umfasst.

14. Vorrichtung nach Anspruch 12, wobei das zweite Gerät entweder ein Video-See-Through-Gerät oder ein optisches See-Through-Gerät ist.

15. Computerlesbares Medium, das computerausführbaren Code für Grafikverarbeitung speichert, mit Code zum Durchführen des Verfahrens nach einem der Ansprüche 1 bis 8.

## Revendications

1. Procédé de traitement infographique (600), comprenant :
pour une scène comprenant un ou plusieurs objets du monde réel et un ou plusieurs objets générés par ordinateur, CG, la scène étant **caractérisée par** une géométrie de scène d'un premier temps :
la génération (510), sur la base de la géométrie de scène du premier temps, d'informations d'ombre pour chacune d'une ou plusieurs ombres projetées par un objet CG de la scène sur un ou plusieurs objets du monde réel de la scène, dans lequel les informations d'ombre comprennent i) des facteurs d'ombre, chaque facteur d'ombre décrivant un effet d'atténuation de lumière d'une ombre projetée sur une surface d'objet du monde réel et incorporé dans un atlas de nuançage de la scène, et ii) un ensemble d'identifiants, chaque identifiant dans l'ensemble identifiant une surface d'objet du monde réel de la scène affectée par un facteur d'ombre ;
l'encodage (630) de l'atlas de nuançage en un flux de données vidéo ; et
la transmission (640), via un réseau à un second dispositif, de l'ensemble d'identifiants et du flux vidéo encodant l'atlas de nuançage.

2. Procédé selon la revendication 1, dans lequel le flux vidéo est un flux de transport selon la norme MPEG (Moving Picture Experts Group).

3. Procédé selon la revendication 1 :
le procédé comprend en outre, avant la génération, la réception, à partir du second dispositif via le réseau, d'une géométrie de scène du second dispositif ;
dans lequel la géométrie de scène du premier temps est basée au moins en partie sur la géométrie de scène du second dispositif.

4. Procédé selon la revendication 3, dans lequel la géométrie de scène du second dispositif comprend une ou plusieurs : informations de pose du second dispositif, informations bidimensionnelles capturées par le second dispositif, ou informations de maillage du second dispositif.

5. Procédé selon la revendication 1, dans lequel le second dispositif est un dispositif vidéo transparent ou un dispositif optique transparent.

6. Procédé d'infographie (600), comprenant :
pour une scène comprenant un ou plusieurs objets du monde réel et un ou plusieurs objets générés par ordinateur, CG, la scène étant **caractérisée par** une géométrie de scène d'un premier temps :
la réception (650), par un second dispositif à partir d'un premier dispositif et via un réseau, d'informations d'ombre comprenant i) un ensemble d'identifiants et ii) un flux vidéo encodant un atlas de nuançage, dans lequel :
l'atlas de nuançage comprend une pluralité de facteurs d'ombre, chaque facteur d'ombre décrivant un effet d'atténuation de lumière d'une ombre projetée par un objet CG de la scène sur un ou plusieurs objets du monde réel de la scène, et
chaque identifiant dans l'ensemble identifie un objet du monde réel de la scène affectée par un facteur d'ombre ;
le décodage (660), par le second dispositif, du flux vidéo ; et
le rendu et l'affichage (520), par le second dispositif, d'une image de la scène en fonction i) des informations d'ombre et ii) de la géométrie de scène à un temps du rendu postérieur au premier temps.

7. Procédé selon la revendication 6, dans lequel le flux vidéo est un flux de transport selon la norme MPEG (Motion Picture Experts group), et/ou le procédé comprenant en outre, avant la réception, la transmission, par le second dispositif au premier dispositif et via le réseau, de la géométrie de scène du second dispositif ;
dans lequel la géométrie de scène du premier temps est basée au moins en partie sur la géométrie de scène du second dispositif transmise et de préférence dans lequel la géométrie de scène du second dispositif transmise comprend une ou plusieurs : informations de pose du second dispositif, informations bidimensionnelles capturées par le second dispositif, ou informations de maillage du second dispositif.

8. Procédé selon la revendication 6, dans lequel le second dispositif est un dispositif vidéo transparent ou un dispositif optique transparent.

9. Appareil (310) de traitement graphique, comprenant :
une mémoire ; et
au moins un processeur couplé à la mémoire et configuré pour, pour une scène comprenant un ou plusieurs objets du monde réel et un ou plusieurs objets générés par ordinateur, CG, et **caractérisée par** une géométrie de scène d'un premier temps :
générer, sur la base de la géométrie de scène du premier temps, des informations d'ombre pour chacune d'une ou plusieurs ombres projetées par un objet CG de la scène sur un ou plusieurs objets du monde réel de la scène, dans lequel les informations d'ombre comprennent i) des facteurs d'ombre, chaque facteur d'ombre décrivant un effet d'atténuation de lumière d'une ombre projetée sur une surface d'objet du monde réel et incorporé dans un atlas de nuançage de la scène, et ii) un ensemble d'identifiants, chaque identifiant dans l'ensemble identifiant une surface d'objet du monde réel de la scène affectée par un facteur d'ombre ;
encoder (316) l'atlas de nuançage en un flux de données vidéo ; et
transmettre, via un réseau (320) à un second dispositif, l'ensemble d'identifiants et le flux vidéo encodant l'atlas de nuançage.

10. Appareil selon la revendication 9, dans lequel le flux vidéo est un flux de transport selon la norme MPEG (Moving Picture Experts Group), et/ou dans lequel l'au moins un processeur est configuré en outre pour recevoir, avant la génération et à partir du second dispositif via le réseau, une géométrie de scène du second dispositif, dans lequel la géométrie de scène du premier temps est basée au moins en partie sur la géométrie de scène du second dispositif et de préférence dans lequel la géométrie de scène du second dispositif comprend une ou plusieurs : informations de pose du second dispositif, informations bidimensionnelles capturées par le second dispositif, ou informations de maillage du second dispositif.

11. Appareil selon la revendication 9, dans lequel le second dispositif est un dispositif vidéo transparent ou un dispositif optique transparent.

12. Appareil (330) de traitement infographique, comprenant :
pour une scène comprenant un ou plusieurs objets du monde réel et un ou plusieurs objets générés par ordinateur, CG, la scène étant **caractérisée par** une géométrie de scène d'un premier temps :
un moyen de réception, par un second dispositif à partir d'un premier dispositif et via un réseau, d'informations d'ombre comprenant i) un ensemble d'identifiants et ii) un flux vidéo encodant un atlas de nuançage, dans lequel :
l'atlas de nuançage comprend une pluralité de facteurs d'ombre, chaque facteur d'ombre décrivant un effet d'atténuation de lumière d'une ombre projetée par un objet CG de la scène sur un ou plusieurs objets du monde réel de la scène, et
chaque identifiant dans l'ensemble identifie un objet du monde réel de la scène affectée par un facteur d'ombre ;
un moyen de décodage (332), par le second dispositif, du flux vidéo ; et
un moyen de rendu et d'affichage (334), par le second dispositif, d'une image de la scène en fonction i) des informations d'ombre et ii) de la géométrie de scène à un temps de rendu postérieur au premier temps.

13. Appareil selon la revendication 12, dans lequel le flux vidéo est un flux de transport selon la norme MPEG (Motion Picture Experts Group), et/ou l'appareil comprenant en outre un moyen de transmission, par le second dispositif au premier dispositif et via le réseau avant la réception, d'une géométrie de scène du second dispositif, et dans lequel la géométrie de scène du premier temps est basée au moins en partie sur la géométrie de scène du second dispositif transmise et de préférence dans lequel la géométrie de scène du second dispositif comprend une ou plusieurs : informations de pose du second dispositif, informations bidimensionnelles capturées par le second dispositif, ou informations de maillage du second dispositif.

14. Appareil selon la revendication 12, dans lequel le second dispositif est un dispositif vidéo transparent ou un dispositif optique transparent.

15. Support lisible par ordinateur stockant un code de traitement graphique exécutable par ordinateur, comprenant un code pour exécuter le procédé selon l'une quelconque des revendications 1 à 8.
